# EUROPEAN PATENT APPLICATION

(11) **EP 3 016 012 A1**
(43) Date of publication of application: **04.05.2016**
(21) Application number: 15191402.5
(22) Date of filing: 26.10.2015
(51) Int. Cl.: G06F 21/30, H04L 29/06

(54) **METHOD AND DEVICE FOR MARKING TERMINAL**

(30) Priority: 31.10.2014 CN 201410602432
(71) Applicant: Xiaomi Inc., Beijing 100085 (CN)
(72) Inventor: SHEN, Jianrong, Beijing 100085 (CN); TAN, Guobin, Beijing 100085 (CN); MA, Zhe, Beijing 100085 (CN)
(74) Representative: Bongiovanni, Simone

(57) **Abstract**

The present disclosure discloses a method and a device for marking a terminal, which belongs to the field of Internet technology. The method for marking a terminal includes: receiving (101, 201) a webpage-access-request for accessing a target webpage sent by the terminal; sending (102) preset drawing information to the terminal, the preset drawing information for instructing the terminal to draw a corresponding object according to the preset drawing information; acquiring (103, 203) object information for characterizing the object drawn by the terminal; and generating (104) identification information for identifying the terminal according to the object information.

## Description

### TECHNICAL FIELD

The present disclosure relates to the field of Internet technology, and more particularly, to a method and a device for marking a terminal.

### BACKGROUND

In order to provide a more highly personalized service for a user, websites will typically generate identification information for a terminal to identify the terminal by the identification information.

One conventional method for marking a terminal includes: when the terminal accesses a certain website for a first time, a server of the website generates identification information corresponding to the terminal, and sends a cookie (a small text file) which carries the identification information to the terminal. Then, when the terminal accesses the terminal again, the terminal may send the cookie to the server, and the server identifies the terminal by the identification information in the received cookie.

In the process of implementing the present disclosure, it is found that at least the following defects exist in the related art: as users have become more cautious about their personal privacy, they may tend to shield the cookies sent by the server. Thus, the server cannot mark the terminal according to the identification information in the cookies.

### SUMMARY

To solve the problem that the server cannot mark the terminal in the related art, the present disclosure provides a method and a device for marking a terminal. The technical solutions are as follows.

According to a first aspect of embodiments of the present disclosure, a method for marking a terminal is provided. The method includes:
receiving a webpage-access-request for accessing a target webpage sent by the terminal;
sending preset drawing information to the terminal, the preset drawing information for instructing the terminal to draw a corresponding object according to the preset drawing information;
acquiring object information for characterizing the object drawn by the terminal; and
generating identification information for identifying the terminal according to the object information.

Optionally, sending preset drawing information to the terminal includes:
sending webpage information containing a script in an interpreted script language JavaScript to the terminal, the JavaScript script carrying the preset drawing information.

Optionally, generating identification information for identifying the terminal according to the object information includes:
acquiring character information of the object information; and
generating the identification information of the terminal according to the character information.

Optionally, acquiring the character information of the object information includes:
when the object is a picture and the object information is information acquired in a PNG (Portable Network Graphic) format, extracting a check code in the object information and taking the check code as the character information.

Optionally, acquiring the character information of the object information includes:
calculating a hash value of the object information through a preset hash algorithm, and taking the hash value as the character information.

Optionally, the method further includes:
if the terminal supports small text files cookies, sending a cookie which carries the identification information to the terminal; the terminal caching the cookie and sending the cookie to the sever when accessing a sever afterwards.

Optionally, the method further includes:
detecting whether the webpage-access-request carries a small text file cookie which carries the identification information of the terminal; and
if the webpage-access-request does not carry the cookie, preforming an operation of sending the preset drawing information to the terminal.

According to a second aspect of embodiments of the present disclosure, a device for marking a terminal is provided. The device includes:
a request-receiving module configured to receive a webpage-access-request for accessing a target webpage sent by the terminal;
a drawing-information-sending module configured to send preset drawing information to the terminal, the preset drawing information for instructing the terminal to draw a corresponding object according to the preset drawing information;
an object-information-acquiring module configured to acquire object information for characterizing the object drawn by the terminal; and
an identification-information-generating module configured to generate identification information for identifying the terminal according to the object information.

Optionally, the drawing-information-sending module is configured to send webpage information containing a script in an interpreted script language JavaScript to the terminal, the JavaScript script carrying the preset drawing information.

Optionally, the identification-information-generating module includes:
a character-information-acquiring sub-module configured to acquire character information of the object information; and
an identification-information-generating sub-module configured to generate the identification information of the terminal according to the character information.

Optionally, the character-information-acquiring sub-module is configured to, when the object is a picture and the object information is information acquired in a PNG format, extract a check code in the object information and take the check code as the character information.

Optionally, the character-information-acquiring sub-module is configured to calculate a hash value of the object information through a preset hash algorithm, and take the hash value as the character information.

Optionally, the device further includes:
an identification-information-sending module configured to, if the terminal supports small text files cookies, send a cookie which carries the identification information to the terminal; the terminal is configured to cache the cookie and send the cookie to the sever when it accesses a sever afterwards.

Optionally, the device further includes:
a request-detecting-module configured to detect whether the webpage-access-request carries a small text file cookie which carries the identification information of the terminal; and
the drawing-information-sending module configured to, if a detecting result of the request-detecting-module is that the webpage-access-request does not carry the cookie, preform an operation of sending the preset drawing information to the terminal.

According to a third aspect of the embodiments of the present disclosure, a device for marking a terminal is provided. The device includes:
a processor;
a memory for storing executable instructions by the processor;
wherein the processor is configured to perform:
receiving a webpage-access-request for accessing a target webpage sent by the terminal;
sending preset drawing information to the terminal, the preset drawing information for instructing the terminal to draw a corresponding object according to the preset drawing information;
acquiring object information for characterizing the object drawn by the terminal; and
generating identification information for identifying the terminal according to the object information.

According to a fourth aspect of the embodiments of this disclosure, there is provided a computer program, which when executing on a processor, performs the method according to the above first aspect.

The technical solutions provided by embodiments of the present disclosure may bring about the following advantageous effects, including:
preset drawing information is sent to the terminal after a webpage-access-request sent by the terminal is received, and the terminal draws a corresponding object according to the preset draw information; object information for characterizing the object drawn by the terminal is acquired; identification information for identifying the terminal is generated according to the object information. Thus, it may be solved the problem in the related art that a sever cannot mark the terminal when the cookie which carries the terminal identification information is shielded by the terminal; and it may be achieved the effect that the identification information of the terminal may be generated dynamically, so it is always possible to mark the terminal.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for marking a terminal according to an exemplary embodiment.
Fig. 2 is a flow chart of a method for marking a terminal according to another exemplary embodiment.
Fig. 3 is a block diagram of a device for marking a terminal according to an exemplary embodiment.
Fig. 4 is a block diagram of a device for marking a terminal according to another exemplary embodiment.
Fig. 5 is a block diagram of a device for marking a terminal according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects associated to the invention as recited in the appended claims.

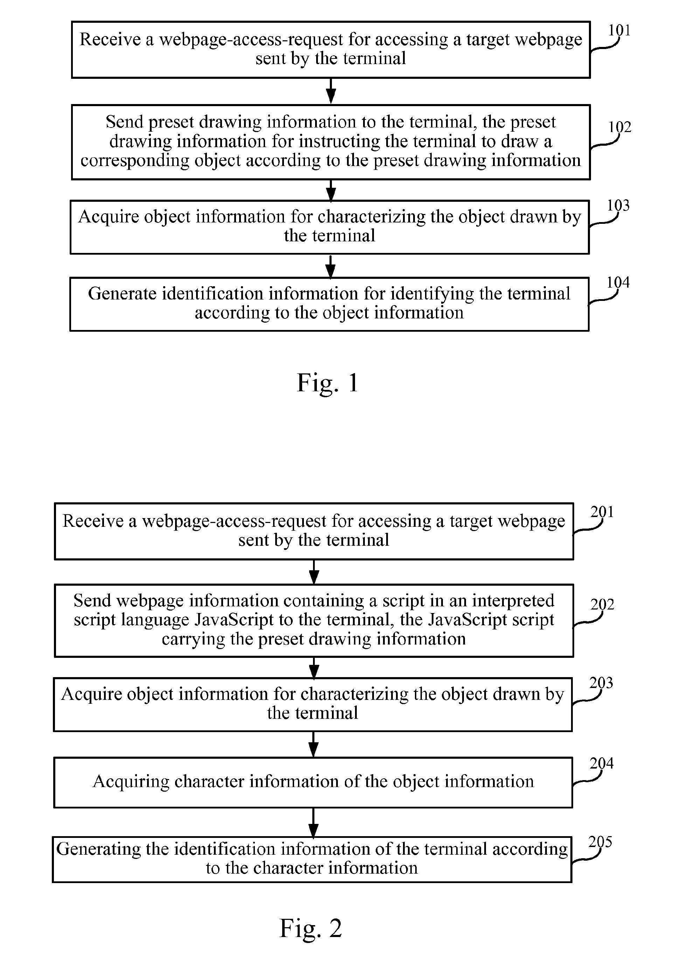

Fig. 1 is a flow chart of a method for marking a terminal according to an exemplary embodiment. As shown in Fig. 1, the method for marking the terminal may include the following steps.

In step 101, a webpage-access-request for accessing a target webpage sent by the terminal is received.

In step 102, preset drawing information is sent to the terminal, the preset drawing information for instructing the terminal to draw a corresponding object according to the preset drawing information.

In step 103, object information for characterizing the object drawn by the terminal is acquired.

In step 104, identification information for identifying the terminal is generated according to the object information.

Accordingly, in the method for marking the terminal provided by embodiments of the present disclosure, preset drawing information is sent to the terminal after a webpage-access-request sent by the terminal is received, and the terminal draws a corresponding object according to the preset draw information; object information for characterizing the object drawn by the terminal is acquired; identification information for identifying the terminal is generated according to the object information. Thus, it may be solved the problem in the related art that a sever cannot mark the terminal when the cookie which carries the terminal identification information is shielded by the terminal; and it may be achieved the effect that the identification information of the terminal may be generated dynamically, so it is always possible to mark the terminal.

Fig. 2 is a flow chart of a method for marking a terminal according to an exemplary embodiment. As shown in Fig. 2, the method for marking the terminal may include the following steps.

In step 201, a webpage-access-request for accessing a target webpage sent by the terminal is received.

When he intends to access a target webpage via a terminal, a user may operate the terminal to send a webpage-access-request for accessing the target webpage to a server. Correspondingly, the server may receive the webpage-access-request sent by the terminal.

In step 202, webpage information containing a script in an interpreted script language JavaScript is sent to the terminal, the JavaScript script carrying the preset drawing information.

After the server receives the webpage-access-request sent by the terminal, the server may send webpage information containing a JavaScript script to the terminal, the JavaScript script carrying the preset drawing information. Wherein, the preset drawing information is for instructing the terminal to draw a corresponding object according to the preset drawing information. Different terminals will draw different objects according to the preset drawing information and the object drawn by the terminal according to the preset drawing information may be at least one of a picture, an animation and a video, which is not limited in the present embodiment.

After the server sends the webpage information to the terminal, the terminal may receive the webpage information sent by the server correspondingly, and draws a corresponding object according to the preset drawing information carried in the JavaScript script in the received webpage information.

In the present embodiment, the preset drawing information is information for instructing the terminal to draw a corresponding picture, for example. The server may send the webpage information containing a JavaScript script to the terminal which carries Canvas codes. Since configuration information of different terminals may be different, the configuration information of the terminal including at least one of a graphic processing engine employed by the browser in the terminal, a picture export employed by the browser, a default compression level employed by the browser, a setting for anti-aliasing and sub-pixel render operation employed by the operating system of the terminal, an algorithm of a setting for anti-aliasing and sub-pixel render operation employed by the operating system of the terminal, and a video card employed by the terminal. Eave if one item in the configuration information is different, pictures drawn by the terminals according to the Canvas codes will be different. Therefore, in practical implementing, different terminals will draw different pictures according to the Canvas codes. Even though the terminals are of a same type in a same manufactured batch, the resulting drawn pictures will be different due to different serial numbers of the video cards in the terminals.

It should be noted that, in the present embodiment, the server instructs the terminal to draw pictures according to Canvas codes for example. In practical implementing, the server may also instruct the terminal to draw pictures according to codes of other types, as long as different terminals may draw different pictures according to the code. This is not limited in the present embodiment.

It should be further noted that, since Canvas codes apply to an HTML5 (Hyper Text Markup Language) website and a website of a version superior to HTML5, the target webpage in the present embodiment that the terminal requests to access is a webpage in an HTML5 website or a website of a version superior to HTML5.

In step 203, object information for characterizing the object drawn by the terminal is acquired.

After the server sends the preset drawing information to the terminal, the server may acquire the picture information for characterizing the picture drawn by the terminal from the terminal.

In practical implementing, the server may acquire the picture information of the picture drawn by the terminal in a PNG (Portable Network Graphic) format. For example, the terminal may acquire a base64 coded string which is returned by the terminal and for characterizing the pattern of the picture.

It should be noted that, in the present embodiment, the server acquires the picture information of the picture in a PNG format for example. In practical implementing, the server may also acquire the picture information of the picture in other formats, which is not limited in the present embodiment.

In step 204, character information of the object information is acquired.

After the server acquires the picture information of the picture, in order to perform the subsequent steps, the server may acquire the character information of the picture information.

In practical implementing, the server may acquire the character information of the picture information in the following manners.

In a first manner, when the object is a picture and the object information is picture information acquired in a PNG format, a check code in the object information is extracted and the check code is taken as the character information.

Since the picture information acquired in a PNG format contains a check code, and different picture patterns correspond to different check codes, the server may simply acquire the check code in the picture information, and then simply take the acquired check code as the character information.

Since each data block of the picture information acquired in a PNG format has a check code, in order to reduce the processing complexity of the server, the server may extract the 32-bit check code in the last data block and take the extracted 32-bit check code as the character information.

In a second manner, a hash value of the object information is calculated through a preset hash algorithm, and the hash value is taken as the character information.

Since different terminals may draw different pictures according to the preset drawing information, the server may also simply calculate the hash value of the acquired picture information through a preset hash algorithm, and then simply take the calculated hash value as the character information.

It should be noted that, in the present embodiment, the character information is acquired in the above manners for example. In practical implementing, the server may also acquire the character information in other manners. For example, a hash value of the acquired check code is calculated through a hash algorithm and the calculated hash value is taken as the character information and so on, as long as the acquired character information may be employed to distinguish different pictures, that is, the character information of different pictures is different. The acquisition methods are not limited in the present embodiment.

In step 205, identification information for identifying the terminal is generated according to the character information.

After the server acquires the character information, the server may generate identification information for identifying the terminal according to the character information.

In practical implementing, the terminal may simply take the extracted character information as the identification information of the terminal.

When the terminal accesses the webpage each time, the server may generate the identification information of the terminal dynamically, and the server may generate the same identification information each time for the same terminal, so the server may identify the terminal by the identification information generated each time.

Accordingly, in the method for marking the terminal provided by embodiments of the present disclosure, preset drawing information is sent to the terminal after a webpage-access-request sent by the terminal is received, and the terminal draws a corresponding object according to the preset draw information; object information for characterizing the object drawn by the terminal is acquired; identification information for identifying the terminal is generated according to the object information. Thus, it may be solved the problem in the related art that a sever cannot mark the terminal when the cookie which carries the terminal identification information is shielded by the terminal; and it may be achieved the effect that the identification information of the terminal may be generated dynamically, so it is always possible to mark the terminal.

In addition, in the present embodiment, the preset drawing information which is carried in the JavaScript script is sent to the terminal, such that the terminal cannot shield the preset drawing information (since the JavaScript script is for generating a dynamic webpage, if the terminal shields the JavaScript script, the webpage will not operate normally, so the terminal usually will not shield the JavaScript script). Thus, it may be ensured that the server may always generate the identification information of the terminal dynamically and then identify the terminal according to the generated identification information.

It should be noted that, if the terminal does not shield cookies, that is, the terminal supports cookies, after the terminal generates the identification information, the server may send a cookie which carries the identification information to the terminal; the terminal receives the cookie sent by the server correspondingly and caches the received cookie. Afterwards, when the terminal accesses the server again, the terminal may send the cached cookie to the server. In this way, when the terminal accesses the server again, the server does not need to generate the identification information of the terminal again, which reduces the processing complexity of the server.

It should be further noted that, the server may also perform the following steps after the server receives the webpage-access-request sent by the server.

Firstly, it is detected whether the webpage-access-request carries a small text file cookie which carries the identification information of the terminal.

Since when the terminal accesses the webpage in a certain website previously, the server may send a cookie which carries the identification information of the terminal to the terminal, and the terminal caches the received cookie and sends the cookie to the server when the terminal accesses the webpage in the website afterwards. Therefore, after the server receives the webpage-access-request sent by the terminal, the server may detect whether the received webpage-access-request carries the cookie which carries the identification information of the terminal.

Secondly, if the webpage-access-request does not carry the cookie, it is preformed an operation of sending the preset drawing information to the terminal.

If a detecting result of the server is that the webpage-access-request does not carry the cookie, to identify the terminal afterwards, the server may perform an operation of sending the preset drawing information to the terminal.

Otherwise, if a detecting result of the server is that the webpage-access-request carries the cookie, then the server may identify the terminal directly according to the identification information in the cookie. Then the process is finished. The present embodiment will not repeatedly illustrate herein.

The following is the device embodiment of the present disclosure and may be used to perform the method embodiment of the present disclosure. For the undisclosed detail in the device embodiment of the present disclosure, please refer to the method embodiment of the present disclosure.

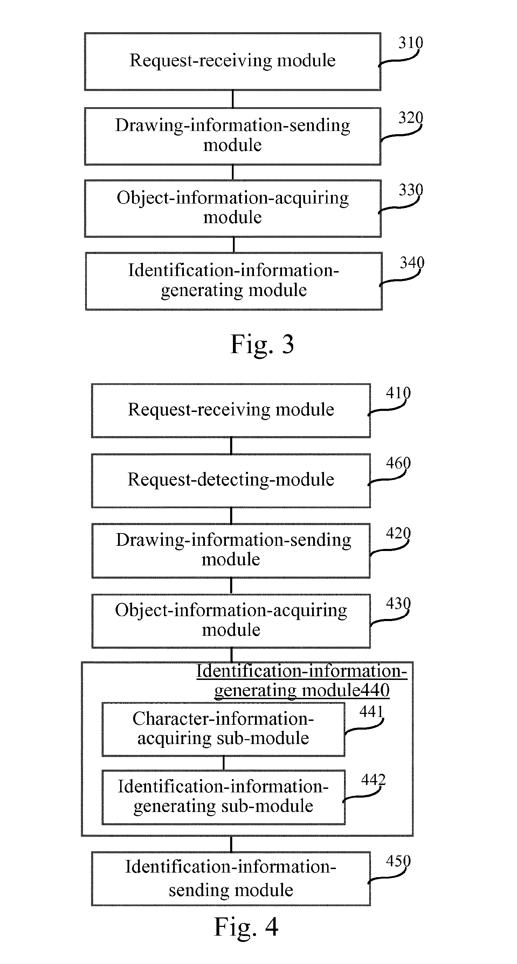

Fig. 3 is a block diagram of a device for marking a terminal according to an exemplary embodiment. As shown in Fig. 3, the device for marking a terminal may include, but not limited to, a request-receiving module 310, a drawing-information-sending module 320, an object-information-acquiring module 330 and an identification-information-generating module 340.

The request-receiving module 310 is configured to receive a webpage-access-request for accessing a target webpage sent by the terminal;
the drawing-information-sending module 320 is configured to send preset drawing information to the terminal, the preset drawing information for instructing the terminal to draw a corresponding object according to the preset drawing information;
the object-information-acquiring module 330 is configured to acquire object information for characterizing the object drawn by the terminal; and
the identification-information-generating module 340 is configured to generate identification information for identifying the terminal according to the object information.

Accordingly, in the device for marking the terminal provided by embodiments of the present disclosure, preset drawing information is sent to the terminal after a webpage-access-request sent by the terminal is received, and the terminal draws a corresponding object according to the preset draw information; object information for characterizing the object drawn by the terminal is acquired; identification information for identifying the terminal is generated according to the object information. Thus, it may be solved the problem in the related art that a sever cannot mark the terminal when the cookie which carries the terminal identification information is shielded by the terminal; and it may be achieved the effect that the identification information of the terminal may be generated dynamically, so it is always possible to mark the terminal.

Fig. 4 is a block diagram of a device for marking a terminal according to another exemplary embodiment. As shown in Fig. 4, the device for marking a terminal may include, but not limited to, a request-receiving module 410, a drawing-information-sending module 420, an object-information-acquiring module 430 and an identification-information-generating module 440.

The request-receiving module 410 is configured to receive a webpage-access-request for accessing a target webpage sent by the terminal;
the drawing-information-sending module 420 is configured to send preset drawing information to the terminal, the preset drawing information for instructing the terminal to draw a corresponding object according to the preset drawing information;
the object-information-acquiring module 430 is configured to acquire object information for characterizing the object drawn by the terminal; and
the identification-information-generating module 440 is configured to generate identification information for identifying the terminal according to the object information.

Optionally, the drawing-information-sending module 420 is configured to send webpage information containing an interpreted script language JavaScript script to the terminal, the JavaScript script carrying the preset drawing information.

Optionally, the identification-information-generating module 440 includes:
a character-information-acquiring sub-module 441 configured to acquire character information of the object information; and
an identification-information-generating sub-module 442 configured to generate the identification information of the terminal according to the character information.

Optionally, the character-information-acquiring sub-module 441 is configured to, when the object is a picture and the object information is information acquired in a PNG format, extract a check code in the object information and take the check code as the character information.

Optionally, the character-information-acquiring sub-module 441 is configured to calculate a hash value of the object information through a preset hash algorithm, and take the hash value as the character information.

Optionally, the device further includes:
an identification-information-sending module 450 configured to, if the terminal supports small text files cookies, send a cookie which carries the identification information to the terminal; the terminal is configured to cache the cookie and send the cookie to the sever when it accesses a sever afterwards.

Optionally, the device further includes:
a request-detecting-module 460 configured to detect whether the webpage-access-request carries a small text file cookie which carries the identification information of the terminal; and
the drawing-information-sending module 420 configured to, if a detecting result of the request-detecting-module is that the webpage-access-request does not carry the cookie, preform an operation of sending the preset drawing information to the terminal.

Accordingly, in the device for marking the terminal provided by embodiments of the present disclosure, preset drawing information is sent to the terminal after a webpage-access-request sent by the terminal is received, and the terminal draws a corresponding object according to the preset draw information; object information for characterizing the object drawn by the terminal is acquired; identification information for identifying the terminal is generated according to the object information. Thus, it may be solved the problem in the related art that a sever cannot mark the terminal when the cookie which carries the terminal identification information is shielded by the terminal; and it may be achieved the effect that the identification information of the terminal may be generated dynamically, so it is always possible to mark the terminal.

The present embodiment sends the preset drawing information which is carried in the Script in JavaScript to the terminal, such that the terminal cannot shield the preset drawing information (Script in JavaScript is for generating dynamic webpages, if the terminal shields the Script in JavaScript, the webpage is almost impossible to run, so the terminal usually will not shield the Script in JavaScript), which guarantees that the server can always generate the identification information of the terminal dynamically and then identify the terminal according to the generated identification information.

As for the device in the above embodiments, the specific implementations for respective modules to perform operations have been described in detail in the embodiments regarding methods, and thus the detailed descriptions thereof will not be provided here.

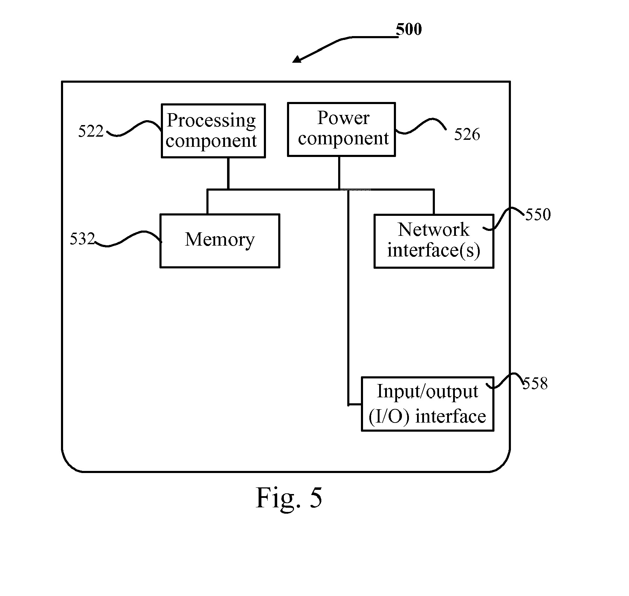

FIG. 5 is a block diagram of a device 500 for marking a terminal according to an exemplary embodiment. For example, the device 500 may be provided as a server. Referring to FIG. 5, the device 500 includes a processing component 522 that further includes one or more processors, and memory resources represented by a memory 532 for storing instructions executable by the processing component 522, such as application programs. The application programs stored in the memory 532 may include one or more modules each corresponding to a set of instructions. Further, the processing component 522 is configured to execute the instructions to perform the above described method for marking a terminal.

The device 500 may also include a power component 526 configured to perform power management of the device 500, wired or wireless network interface(s) 550 configured to connect the device 500 to a network, and an input/output (I/O) interface 558. The device 500 may operate based on an operating system stored in the memory 532, such as Windows ServerTM, Mac OS XTM, UnixTM, LinuxTM, FreeBSDTM, or the like.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for marking a terminal, **characterized in that**, the method comprises:
receiving (101, 201) a webpage-access-request for accessing a target webpage sent by the terminal;
sending (102) preset drawing information to the terminal, the preset drawing information for instructing the terminal to draw a corresponding object according to the preset drawing information;
acquiring (103, 203) object information for characterizing the object drawn by the terminal; and
generating (104) identification information for identifying the terminal according to the object information.

2. The method according to claim 1, wherein, sending (102) preset drawing information to the terminal comprises:
sending (202) webpage information containing a script in an interpreted script language JavaScript to the terminal, the JavaScript script carrying the preset drawing information.

3. The method according to claim 1, wherein, generating the identification information of the terminal according to the object information comprises:
acquiring (204) character information of the object information; and
generating (205) the identification information of the terminal according to the character information.

4. The method according to claim 3, wherein, acquiring (204) the character information of the object information comprises:
when the object is a picture and the object information is information acquired in a PNG format, extracting a check code in the object information and taking the check code as the character information.

5. The method according to claim 3, wherein, acquiring (204) the character information of the object information comprises:
calculating a hash value of the object information through a preset hash algorithm, and taking the hash value as the character information.

6. The method according to any one of claims 1-5, wherein, the method further comprises:
if the terminal supports small text files cookies, sending a cookie which carries the identification information to the terminal; the terminal caching the cookie and sending the cookie to the sever when accessing a sever afterwards.

7. The method according to any one of claims 1-5, wherein, the method further comprises:
detecting whether the webpage-access-request carries a small text file cookie which carries the identification information of the terminal; and
if the webpage-access-request does not carry the cookie, preforming an operation of sending the preset drawing information to the terminal.

8. A device for marking a terminal, **characterized in that**, the device comprises:
a request-receiving module (310, 410) configured to receive a webpage-access-request for accessing a target webpage sent by the terminal;
a drawing-information-sending module (320, 420) configured to send preset drawing information to the terminal, the preset drawing information for instructing the terminal to draw a corresponding object according to the preset drawing information;
an object-information-acquiring module (330, 430) configured to acquire object information for characterizing the object drawn by the terminal; and
an identification-information-generating module (340, 440) configured to generate identification information for identifying the terminal according to the object information.

9. The device according to claim 8, wherein,
the drawing-information-sending module (320, 420) is configured to send webpage information containing a script in an interpreted script language JavaScript to the terminal, the JavaScript script carrying the preset drawing information.

10. The device according to claim 8, wherein, the identification-information-generating module (340, 440) comprises:
a character-information-acquiring sub-module (441) configured to acquire character information of the object information; and
an identification-information-generating sub-module (442) configured to generate the identification information of the terminal according to the character information.

11. The device according to claim 10, wherein,
the character-information-acquiring sub-module (441) is configured to, when the object is a picture and the object information is information acquired in a PNG format, extract a check code in the object information and take the check code as the character information.

12. The device according to claim 10, wherein,
the character-information-acquiring sub-module (441) is configured to calculate a hash value of the object information through a preset hash algorithm, and take the hash value as the character information.

13. The device according to any one of claims 8-12, wherein, the device further comprises:
an identification-information-sending module (450) configured to, if the terminal supports small text files cookies, send a cookie which carries the identification information to the terminal; the terminal is configured to cache the cookie and send the cookie to the sever when it accesses a sever afterwards.

14. The device according to any one of claims 8-12, wherein, the device further comprises:
a request-detecting-module (460) configured to detect whether the webpage-access-request carries a small text file cookie which carries the identification information of the terminal; and
the drawing-information-sending module (320, 420) configured to, if a detecting result of the request-detecting-module is that the webpage-access-request does not carry the cookie, preform an operation of sending the preset drawing information to the terminal.

15. A device for marking a terminal, **characterized in that**, the device comprises:
a processor (522);
a memory (532) for storing executable instructions by the processor (522);
wherein the processor (522) is configured to perform:
receiving a webpage-access-request for accessing a target webpage sent by the terminal;
sending preset drawing information to the terminal, the preset drawing information for instructing the terminal to draw a corresponding object according to the preset drawing information;
acquiring object information for characterizing the object drawn by the terminal; and
generating identification information for identifying the terminal according to the object information.

16. A computer program, which when executing on a processor (522), performs the method according to any one of claims 1 to 7.
